# FASCICULE DE BREVET EUROPEEN

(11) **EP 0 884 285 B1**
(45) Date de publication et mention de la délivrance du brevet: **13.12.2000**
(21) Numéro de dépôt: 98401447.2
(22) Date de dépôt: 12.06.1998
(51) Int. Cl.: C03B 23/03, C03B 23/035

(54) **Dispositif pour le bombage de vitrages**
Vorrichtung zum Biegen von Glasscheiben
Apparatus for bending glass sheets

(30) Priorité: 14.06.1997 DE 19725189
(43) Date de publication de la demande: 16.12.1998
(73) Titulaire: SAINT-GOBAIN VITRAGE, 92400 Courbevoie (FR)
(72) Inventeur: Radermacher, Herbert, 4730 Raeren (BE); Ollfisch, Karl-Josef, 6462 SW Kerkrade (NL); Diederen, Werner, 52134 Herzogenrath (DE); Dahlhoff, Knut, 52064 Aachen (DE)
(74) Mandataire: Renous Chan, Véronique

(56) Documents cités:
- EP-A- 0 373 992
- EP-A- 0 471 620
- EP-A- 0 494 823
- EP-A- 0 668 249
- EP-B- 0 237 231
- FR-A- 2 536 384
- PATENT ABSTRACTS OF JAPAN vol. 15, no. 128 (C-818), 28 mars 1991 & JP 03 012334 A (ASAHI GLASS CO. LTD.), 21 janvier 1991

## Description

La présente invention concerne un dispositif pour le bombage de vitrages, comportant un four pour le chauffage des vitrages à leur température de bombage, une chambre de bombage contiguë au four, un dispositif de transport acheminant les vitrages à travers le four et dans la chambre de bombage, une forme de bombage supérieure disposée dans la chambre de bombage, au-dessus du plan de transport, des moyens destinés à générer une pression de gaz différentielle pour soulever les vitrages depuis le dispositif de transport contre la forme de bombage supérieure, une forme de bombage inférieure en forme de cadre coopérant avec la forme de bombage supérieure pour assurer le bombage par pressage du vitrage maintenu par la pression de gaz différentielle contre la forme de bombage supérieure, des moyens pour positionner et enlever la forme de bombage inférieure, ainsi qu'un cadre de transport à déplacement horizontal destiné à reprendre le vitrage bombé de la forme de bombage supérieure et à la transporter vers un poste de refroidissement situé en aval.

Un dispositif de bombage de ce type est connu d'après le document EP-0 237 231 B1. Dans le cas de ce dispositif de bombage connu, la forme de bombage inférieure au-dessus du plan de transport des vitrages, formé par un transporteur à rouleaux, est montée de manière à pouvoir se déplacer horizontalement d'une première position à côté de la forme de bombage supérieure vers une deuxième position en dessous de la forme de bombage supérieure retenant le vitrage. A la suite de l'opération de bombage par compression, au cours de laquelle la forme de bombage supérieure est abaissée, avec le vitrage, sur la forme de bombage inférieure, puis à nouveau élevée dans sa position de départ, la forme de bombage inférieure est déplacée latéralement hors de la chambre de bombage proprement dite et reste, jusqu'à l'opération de bombage par compression suivante, dans une position d'attente dans une chambre chauffée. La forme de bombage par compression inférieure n'est, de cette manière, pas soumise à un refroidissement après chaque opération de bombage, comme c'est le cas pour les autres dispositifs de bombage connus, dans lesquels la forme de bombage est utilisée par la suite pour le transport du vitrage bombé dans le poste de refroidissement et est refroidie à cet endroit avec le vitrage. Grâce à l'utilisation tour à tour d'un cadre de moulage exclusivement comme forme de bombage et d'un cadre de transport exclusivement pour le transport des vitrages bombés, on parvient à maintenir continuellement le cadre de moulage à une température relativement élevée, ce qui facilite considérablement l'opération de bombage, en particulier dans le cas de formes de vitrages complexes.

Vu que, dans le cas du dispositif connu, il est nécessaire de prévoir une chambre chauffée fermée à côté du poste de bombage pour la réception de la forme de bombage inférieure dans sa position d'attente, la chambre logeant le poste de bombage n'est plus accessible que d'un côté. Cela complique la surveillance du processus de bombage, ainsi que les possibilités de travail lors d'un changement d'outil nécessaire et lors d'autres interventions indispensables dans le processus de bombage. En outre, la forme de bombage inférieure doit être déplacée horizontalement sur une distance relativement longue avant et après l'opération de bombage par compression, ce qui allonge dans l'ensemble le cycle de bombage.

L'invention a pour but de procurer un dispositif du type mentionné dans le préambule qui permette notamment de diminuer la durée du cycle de bombage. En outre, l'accès à la chambre de bombage proprement dite doit être facilité.

Ce but est atteint suivant l'invention par le fait que la forme de bombage inférieure en forme de cadre est constituée d'au moins deux segments de cadre de bombage qui peuvent être amenés respectivement suivant des directions radiales opposées dans une position libérant l'espace entre le plan de transport horizontal et la forme de bombage supérieure et dans une position de travail formant un cadre de bombage fermé.

Lorsque la forme de bombage inférieure est prévue pour le bombage d'un vitrage essentiellement quadrangulaire, elle est avantageusement divisée au niveau des quatre coins en quatre segments de cadre de bombage. Les différents segments de cadre de bombage peuvent par exemple être montés sur des paliers à glissement et peuvent, soit par un entraînement individuel, soit à l'aide d'un servomoteur commun et par l'intermédiaire d'une mécanique à leviers appropriée, être rapprochés et écartés dans des directions radiales, étant couplés les uns aux autres. En l'occurrence, la distance couverte par les segments individuels dans l'une ou l'autre direction peut être relativement courte et peut, par exemple, ne valoir chaque fois que quelques centimètres.

Le cadre de bombage inférieur peut également être construit de telle sorte que les segments de cadre de bombage individuels soient montés de manière à pouvoir pivoter, dans sa position ouverte vers le haut ou vers le bas, autour d'un axe dirigé parallèlement à la direction principale du segment respectif et soient pourvus d'une commande de pivotement.

D'autres particularités et avantages de l'invention ressortiront des revendications et de la description suivante de formes de réalisation préférées de l'invention en référence aux dessins, dans lesquels :
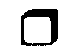 figure 1 : est une vue schématique en coupe horizontale d'une installation de bombage et de trempe conforme à l'invention,
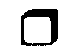 figure 2 : montre les différentes phases d'un cycle de bombage avec les positions correspondantes des formes de bombage,
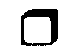 figure 3 : illustre une construction de la forme de bombage inférieure segmentée avec déplacement horizontal des segments de forme de bombage,
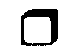 figure 4 : est une vue en coupe suivant la ligne IV-IV de la figure 3,
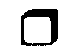 figure 5 : est une vue en coupe suivant la ligne V-V de la figure 3, à plus grande échelle,
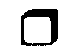 figure 6 : montre une forme de bombage inférieure avec des segments à déplacement horizontal, et un montage à pivotement des segments latéraux de la forme de bombage,
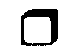 figure 7 : est une vue en coupe suivant la ligne VII-VII de la figure 6,
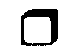 figure 8 : illustre une forme de réalisation de la forme de bombage inférieure segmentée avec un montage à pivotement des segments de la forme de bombage, et,
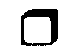 figure 9 : est une vue en coupe suivant la ligne IX-IX de la figure 8.

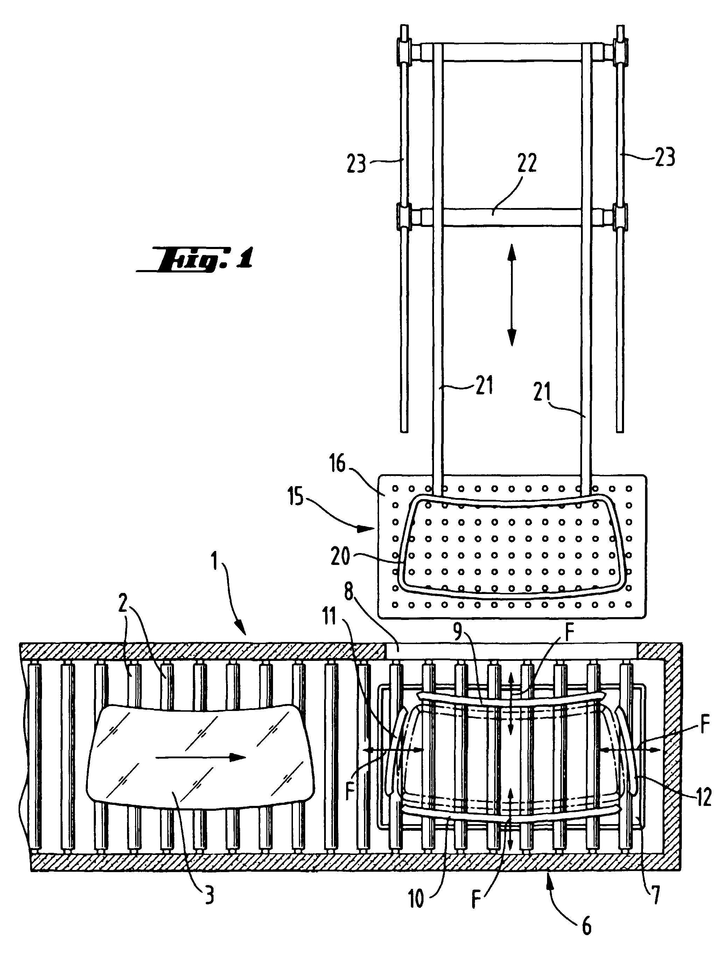

La structure de base d'un dispositif conforme à l'invention ressort de la figure 1 qui est une représentation partielle schématique des principaux composants sous la forme d'une coupe horizontale à travers une installation de bombage et de trempe pour vitrages automobiles. L'installation comporte un four continu horizontal 1 comprenant un transporteur horizontal pour les vitrages 3 constitué de rouleaux de transport entraînés successifs 2. La chambre de bombage 6 est contiguë au four 1. Le transporteur à rouleaux 2 se prolonge dans la chambre de bombage 6. En dessous des rouleaux de transport 2 est prévu un canal 7 dirigé perpendiculairement, dont la section transversale correspond à l'étendue des vitrages 3, et par lequel un flux d'air chaud chauffé à environ 650°C est envoyé depuis le bas contre le vitrage lorsque ce dernier est positionné dans la chambre de bombage 6. Ce flux de gaz génère la pression de gaz différentielle qui permet de soulever les vitrages 3 depuis les rouleaux de transport 2 et de les amener contre la forme de bombage supérieure.

Evidemment, il est possible de générer la pression de gaz différentielle nécessaire d'une autre manière, par exemple en attirant des vitrages se trouvant sur les rouleaux de transport 2 par aspiration à l'aide d'un dispositif-ventouse contenant la forme de bombage supérieure ou par des flux de gaz sous pression individuels dirigés depuis le bas sur les vitrages. De tels dispositifs destinés à générer une pression de gaz différentielle font également partie de l'état de la technique.

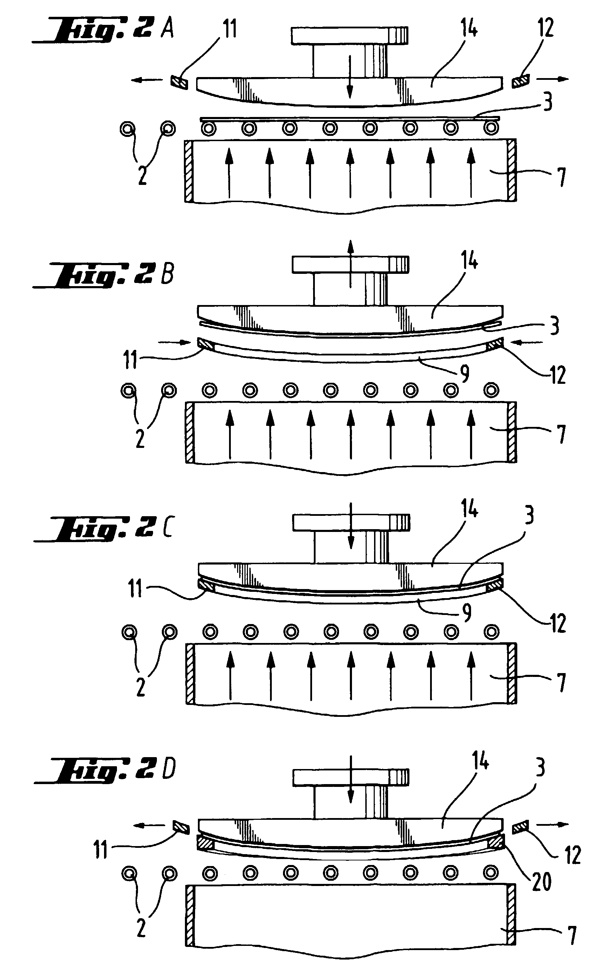

Au-dessus des rouleaux de transport 2 est disposée, dans la chambre de bombage, une forme de bombage 14 (figure 2) dirigée vers le bas par sa face convexe, qui peut être élevée dans la direction verticale. De même, au-dessus des rouleaux de transport 2 sont disposés quatre segments de cadre de bombage 9, 10, 11 et 12 concentriques par rapport à la forme de bombage supérieure et agencés de telle sorte qu'ils puissent être respectivement déplacés par coulissement horizontal dans la direction de la double flèche F. Dans la position fermée, les segments 9 à 12 constituent la forme de bombage inférieure en forme de cadre. Dans la position ouverte, les segments 9 à 12 sont éloignés les uns des autres dans une mesure telle que tant le vitrage 3 que la forme de bombage supérieure 14 puissent passer entre les segments de cadre de bombage.

A côté de la chambre de bombage 6 se trouve le poste de trempe 15, où les vitrages bombés sont refroidis brusquement au moyen de caissons de soufflage 16. Toutefois, il peut être prévu, à la place du poste de trempe 15, un poste de refroidissement dans lequel les vitrages bombés sont refroidis de façon à atteindre une trempe partielle ou un état sans contraintes grâce à une vitesse de refroidissement appropriée plus lente dans le domaine de température critique. Après l'opération de bombage, les vitrages sont repris de la forme de bombage supérieure, à l'aide d'un cadre de transport 20 correspondant au contour du vitrage bombé, et sont transférés, par l'ouverture 8, de la chambre de bombage 6 au poste de trempe 15. Le cadre de transport 20 est monté, par l'intermédiaire de barres-supports 21 appropriées sur un chariot 22 déplaçable sur des rails 23. Les vitrages refroidis au poste de trempe 15 sont ensuite, amenés, au moyen du dispositif de transport 20 à 23, du poste de trempe 15 à un poste de déchargement suivant dans lequel les vitrages trempés sont enlevés du cadre de transport 20.

La figure 2 est une représentation schématique sous la forme de vues en coupe verticale A à D des différentes étapes de procédé successives intervenant lors de l'opération de bombage. La vue en coupe A montre la position des outils de bombage au moment où le vitrage 3, à l'intérieur de la chambre de bombage, a atteint sa position définitive et où il doit être soulevé, au moyen du flux d'air chaud parcourant le canal 7, depuis les rouleaux de transport 2 et être amené contre la surface de bombage convexe de la forme de bombage supérieure 14. La forme de bombage supérieure 14 se trouve en l'occurrence en position abaissée légèrement au-dessus du vitrage reposant sur les rouleaux de transport 2. Les segments de cadre de bombage 11, 12 occupent leur position extérieure de sorte que la forme de bombage supérieure 14 peut passer entre les segments de cadre de bombage 11, 12.

Lorsque le vitrage 3 est appliqué sous l'effet du flux de gaz chaud contre la forme de bombage 14, la forme de bombage 14 est élevée jusqu'à un niveau situé au-dessus des segments de cadre de bombage 11, 12. La position des outils de bombage dans cette phase de bombage est représentée dans la vue en coupe B. La forme de bombage supérieure 14 a atteint sa position finale supérieure, et le vitrage 3 est maintenu par le flux de gaz chaud ascendant contre la surface de formage convexe de la forme de bombage 14. Il se trouve déjà dans une large mesure contre la surface de bombage et doit juste être repressé dans sa zone marginale par le cadre de bombage 9, 11, 12. A cet effet, les différents segments 9, 10, 11, 12 sont rapprochés les uns des autres de telle sorte qu'ils constituent un cadre de bombage fermé.

Tout en maintenant le flux de gaz chaud, la forme de bombage 14 est ensuite abaissée avec le vitrage 3 et le vitrage 3 est pressé contre le cadre de bombage fermé. Cette phase de l'opération de bombage est représentée sur la vue en coupe C.

Immédiatement après le processus de repressage proprement dit, le cadre de transport 20 est amené en dessous de la forme de bombage supérieure 14 et les segments de cadre de bombage 9, 10, 11, 12 sont séparés les uns des autres. Ensuite, la forme de bombage 14 est abaissée, avec le vitrage 3 tout à fait bombé, entre les segments de cadre de bombage. Cette phase consécutive à l'opération de bombage est représentée sur la vue en coupe D. Au lieu de l'agencement et du procédé représentés ici, le cadre de transport 20 peut, après élévation de la forme de bombage 14, être également introduit dans l'espace intermédiaire entre la forme de bombage supérieure 14 et la forme de bombage inférieure 9, 10, 11, 12. Le vitrage 3 est déposé sur le cadre de transport 20 par coupure du flux de gaz chaud et le cas échéant également par soufflage à travers des ouvertures ménagées dans la surface de la forme de bombage supérieure et est, comme décrit plus en détail ci-dessus, transféré de la chambre de bombage dans le poste de trempe.

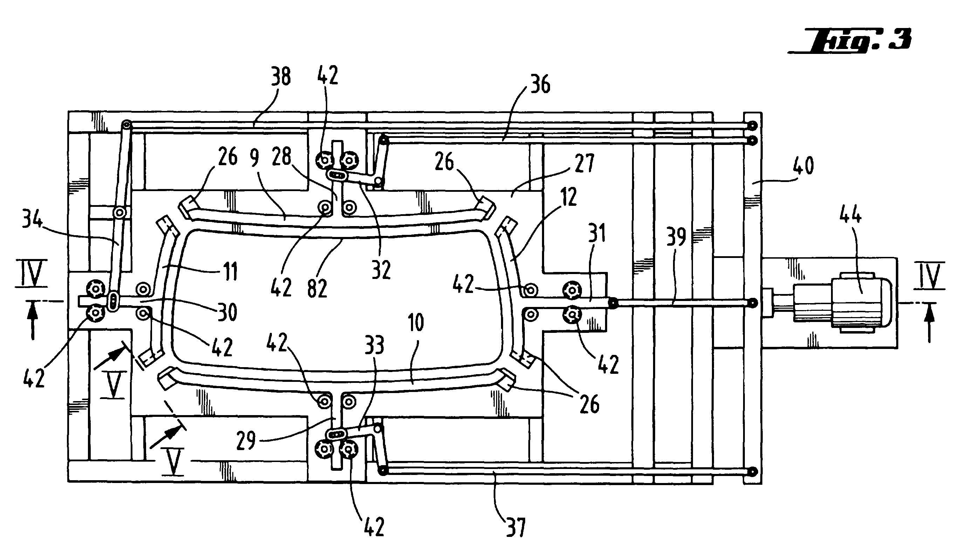

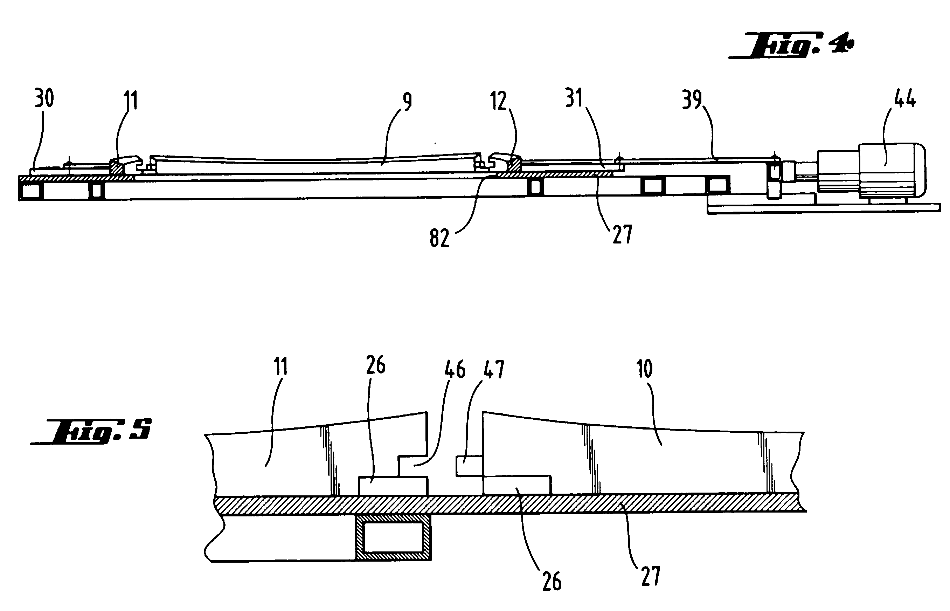

Une forme de construction concernant le montage et le déplacement horizontal des segments de cadre de bombage 9, 10, 11, 12 est représentée en détail sur les figures 3 à 5. Les segments de cadre de bombage 9 à 12 ont chacun une surface de glissement inférieure plane et sont pourvus chacun à leurs extrémités, de patins de guidage 26 saillants vers l'extérieur, par lesquels ils reposent sur une plaque d'appui plane 27. La plaque d'appui 27 est pourvue d'une ouverture centrale 82 qui correspond en forme et en taille à la surface délimitée à l'intérieur des segments de cadre de bombage ouverts. Les segments de cadre de bombage sont pourvus sur leur face extérieure d'un bras de guidage 28, 29, 30, 31 disposé en leur milieu. Les bras de guidage 28, 29, 30 sont en prise respectivement avec des leviers coudés 32, 33 et avec le levier 34, qui à leur tour sont articulés au rail 40 par l'intermédiaire des tringles 36, 37 et 38. Le bras de guidage 31 du segment de cadre de bombage 12 est articulé au rail 40 directement par le biais de la tringle 39. Les bras de guidage 28 à 31 sont chacun montés à coulissement entre des galets de guidage 42. Le servomoteur, qui déplace les segments de cadre de bombage dans la position ouverte et dans la position fermée par l'intermédiaire des tringles et leviers décrits, agit sur le rail 40.

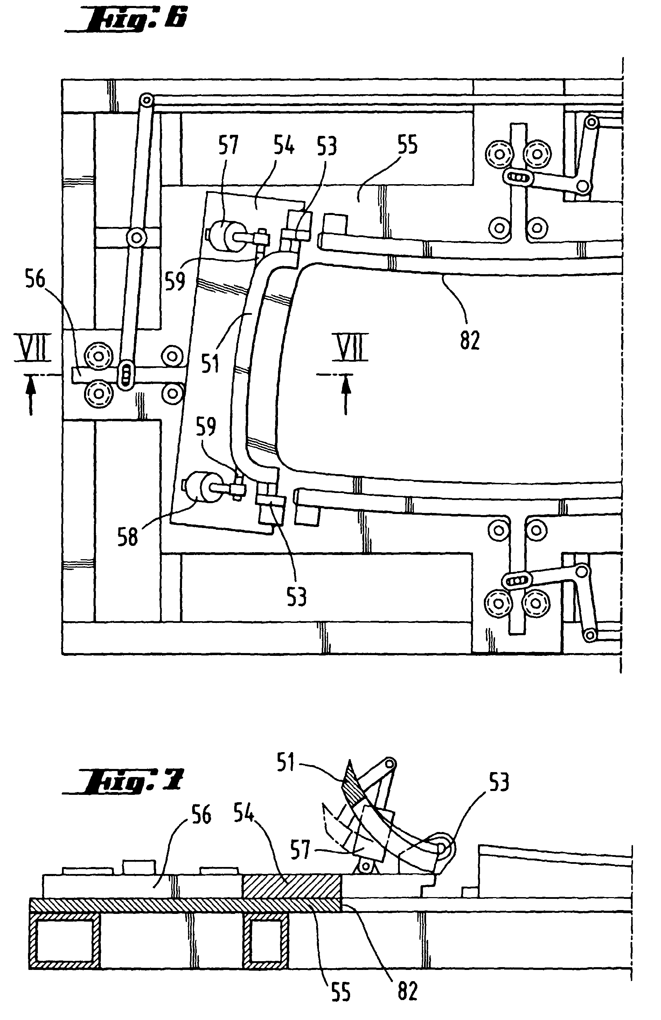

Comme le montre la figure 5, les segments de cadre de bombage sont pourvus, à leurs extrémités par lesquelles ils se rejoignent, d'un dispositif de centrage constitué, dans le cas décrit, d'un système à languette et à rainure 46, 47. On garantit de cette manière que, à l'état fermé, les surfaces de formage des segments de cadre de bombage se fondent l'une dans l'autre au niveau de leurs points de jonction sans former de ressaut.

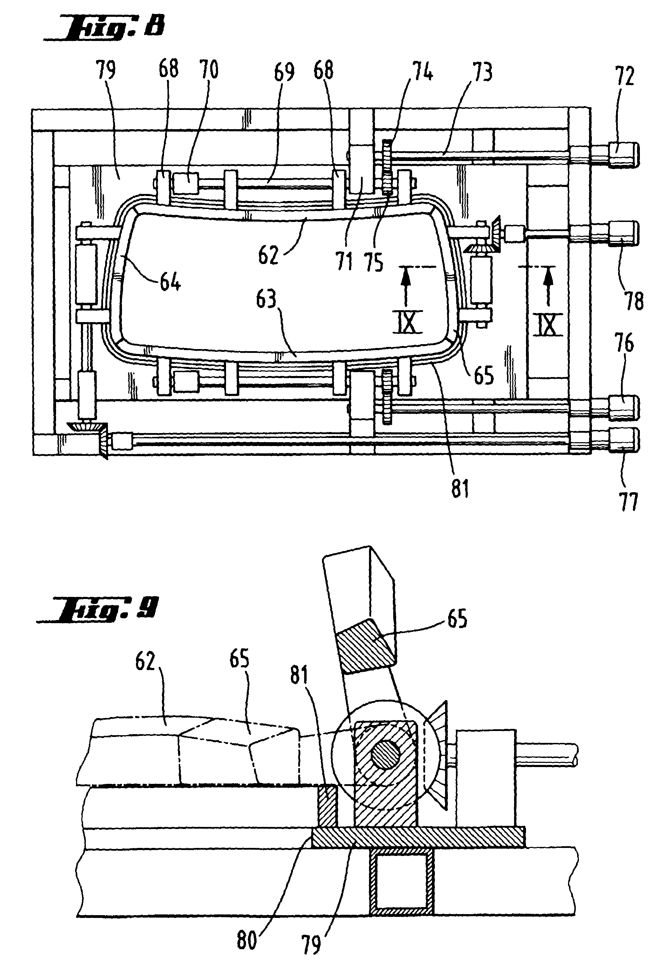

Une variante de réalisation d'un cadre de bombage segmenté est représentée sur les figures 6 et 7. Il s'agit ici d'un cadre de bombage segmenté, dont les segments latéraux 51 peuvent, en plus de leur coulissement horizontal, exécuter un mouvement de pivotement vers le haut. De telles parties latérales pivotantes, dans le cas de cadres de bombage, sont, à l'occasion, nécessaires lorsque les vitrages sont particulièrement fortement bombés dans les zones d'extrémité correspondantes.

Les segments de cadre de bombage latéraux, dont seul le segment de cadre de bombage gauche 51 est représenté sur le dessin, sont montés chacun, par l'intermédiaire de paliers à pivotement 53, sur un plateau 54 qui, pour sa part, est monté à coulissement horizontal sur une plaque d'appui 55 à l'aide du bras de guidage 56 et d'une construction à levier correspondant à la forme de réalisation décrite plus en détail ci-dessus. Des actionneurs appropriés sont disposés sur le plateau 54 et amènent le segment pivotant 51 dans ses deux positions finales. Par souci de simplicité, ces actionneurs sont représentés ici comme des vérins 57, 58 disposés à l'intérieur de la chambre de bombage et dont les tiges de pistons sont articulées à des bras 59 reliés au segment pivotant 51. Dans la pratique, les vérins d'actionnement sont toutefois disposés à l'extérieur de la chambre de bombage chauffée et la transmission de la course des pistons au segment pivotant 51 a lieu via une construction à tringles et à leviers appropriés. Les quatre segments de cadre de bombage de cette forme de réalisation sont tout d'abord rapprochés dans la position abaissée des segments pivotants 51 et la forme de bombage convexe supérieure est abaissée sur ce cadre de bombage. Ensuite, les segments pivotants 51 sont élevés par actionnement des actionneurs 57, 58, grâce à quoi les zones d'extrémités latérales du vitrage sont bombées dans leur forme définitive.

Une autre forme de réalisation d'un dispositif conforme à l'invention est représentée sur les figures 8 et 9. Le cadre de bombage est, dans ce cas, constitué de quatre segments de cadre de bombage 62, 63, 64 et 65 qui, en vue de libérer l'espace entre la forme de bombage supérieure et le plan de transport des vitrages, sont respectivement montés à pivotement vers le haut autour d'un axe horizontal. A cette fin, le segment de cadre de bombage 62 est relié rigidement, par l'intermédiaire de fixations 68, à un arbre 69 monté à rotation dans des paliers 70, 71. A l'intervention du servomoteur 72, le segment 62 est amené par pivotement dans la position souhaitée par l'intermédiaire de l'arbre 73 et des roues dentées 74, 75. De manière analogue, le segment 63 pivote à l'intervention du servomoteur 76, le segment 64 à l'intervention du servomoteur 77 et le segment 65 à l'intervention du servomoteur 78.

Les paliers 70, 71 et les paliers correspondants pour les arbres des autres segments de cadre de bombage sont disposés sur une plaque d'appui 79. La plaque d'appui 79 présente à nouveau une ouverture 80 de grande étendue pour le passage du vitrage. Le long de cette ouverture 80 sont disposées des lattes d'appui 81 correspondant au contour des segments de cadre de bombage et sur lesquelles les segments de cadre de bombage prennent appui dans leur position de travail.

## Revendications

1. Dispositif pour le bombage de vitrages, comportant un four (1) pour le chauffage des vitrages à leur température de bombage, une chambre de bombage (6) contiguë au four, un dispositif de transport (2) acheminant les vitrages (3) à travers le four et dans la chambre de bombage, une forme de bombage supérieure (14) disposée dans la chambre de bombage au-dessus du plan de transport, des moyens (7) destinés à générer une pression de gaz différentielle pour soulever les vitrages depuis le dispositif de transport contre la forme de bombage supérieure, une forme de bombage inférieure en forme de cadre coopérant avec la forme de bombage supérieure pour assurer le bombage par pressage du vitrage maintenu par la pression de gaz différentielle contre la forme de bombage supérieure, des moyens pour positionner et enlever la forme de bombage inférieure, ainsi qu'un cadre de transport (20) à déplacement horizontal destiné à reprendre le vitrage bombé de la forme de bombage supérieure et à le transporter vers un poste de refroidissement (15) situé en aval, caractérisé en ce que la forme de bombage inférieure en forme de cadre est constituée d'au moins deux segments de cadre de bombage (9, 10, 11, 12 ; 51 ; 62, 63, 64, 65) qui peuvent être amenés respectivement suivant des directions radiales opposées dans une position libérant l'espace entre le dispositif de transport horizontal (2) et la forme de bombage supérieure (14) et dans une position de travail formant un cadre de bombage fermé.

2. Dispositif suivant la revendication 1, caractérisé en ce que les segments de cadre de bombage (9, 10, 11, 12 ; 51) sont montés à coulissement horizontal sur une plaque d'appui (55).

3. Dispositif suivant la revendication 1 ou 2, caractérisé en ce que les segments de cadre de bombage (9, 10, 11, 12) sont couplés les uns aux autres au moyen de leviers (32, 33, 34) et de tringles (36, 37, 38, 39) et peuvent être amenés par un servomoteur commun (44) dans leurs deux positions finales.

4. Dispositif suivant l'une quelconque des revendications 1 à 3, caractérisé en ce qu'au moins un segment de cadre de bombage (51) peut être déplacé dans la direction horizontale, est monté en outre dans des paliers de pivotement (53) et peut être amené dans une position de fermeture appliquant le vitrage contre la forme de bombage supérieure.

5. Dispositif suivant la revendication 1, caractérisé en ce que les segments de cadre de bombage (62, 63, 64, 65) sont montés sur un arbre (69) parallèle à la direction principale du segment et peuvent pivoter dans leur position d'ouverture et dans leur position de travail par l'intermédiaire d'une transmission appropriée (73, 74, 75) à l'intervention d'un servomoteur (72).

6. Dispositif suivant la revendication 5, caractérisé en ce que les paliers de pivotement (70, 71) pour les segments de cadre de bombage (62, 63, 64, 65) sont montés sur une plaque d'appui (79) pourvue d'une ouverture de passage (80) pour le vitrage et la forme de bombage supérieure, et en ce que la plaque d'appui (79) est pourvue, le long de l'ouverture (80), de lattes d'appui (81) sur lesquelles les segments de cadre de bombage (62, 63, 64, 65) reposent dans leur position de travail.

7. Dispositif suivant l'une quelconque des revendications 1 à 6, caractérisé en ce que les segments de cadre de bombage (9, 10, 11, 12 ; 62, 63, 64, 65) sont pourvus, à leurs extrémités, de dispositifs de centrage (46, 47).

## Patentansprüche

1. Vorrichtung zum Biegen von Glasscheiben, mit einem Ofen (1) zum Erwärmen der Glasscheiben auf ihre Biegetemperatur, einer an den Ofen anschließenden Biegekammer (6), einer die Glasscheiben (3) durch den Ofen und in die Biegekammer fördernden Fördereinrichtung (2), einer in der Biegekammer oberhalb der Förderebene angeordneten oberen Biegeform (14), Mitteln (7) zur Erzeugung eines Differenzgasdrucks zum Anheben der Glasscheiben von der Fördereinrichtung gegen die obere Biegeform, einer mit der oberen Biegeform zusammenwirkenden ringförmigen unteren Biegeform zum Preßbiegen der durch den Differenzgasdruck an der oberen Biegeform gehaltenen Glasscheibe, Mitteln zum Positionieren und zum Entfernen der unteren Biegeform, sowie mit einem horizontal verfahrbaren Transportring (20) zur Übemahme der gebogenen Glasscheibe von der oberen Biegeform und zum Transport der gebogenen Glasscheibe in eine nachgeordnete Kühlstation (15), **dadurch gekennzeichnet**, daß die ringförmige untere Biegeform aus wenigstens zwei Ringform-Segmenten (9,10,11,12;51;62,63,64,65) besteht, die jeweils in entgegengesetzter radialer Richtung in eine den Raum zwischen der horizontalen Fördereinrichtung (2) und der oberen Biegeform (14) freigebende Stellung und in eine einen geschlossenen Biegerahmen bildende Arbeitsstellung verbringbar sind.

2. Vorrichtung nach Anspruch 1, **dadurch gekennzeichnet**, daß die Ringform-Segmente (0,10,11,12;51) auf einer Lagerplatte (55) in horizontaler Richtung verschiebbar gelagert sind.

3. Vorrichtung nach Anspruch 1 und 2, **dadurch gekennzeichnet**, daß die Ringform-Segmente (9,10,11,12) über Hebel (32,33,34) und Stangen (36,37,38,39) miteinander gekoppelt und durch einen gemeinsamen Stellmotor (44) in ihre beiden Endstellungen verbringbar sind.

4. Vorrichtung nach einem der Ansprüche 1 bis 3, **dadurch gekennzeichnet**, daß wenigstens ein Ringform-Segment (51) in horizontaler Richtung verschiebbar, zusätzlich in Schwenklagern (53) gelagert und in eine die Glasscheibe an die obere Biegeform anlegende Schließstellung verbringbar ist.

5. Vorrichtung nach Anspruch 1, **dadurch gekennzeichnet**, daß die Ringform-Segmente (62,63,64,65) an einer parallel zur Hauptrichtung des Segments angeordneten Welle (69) angeordnet und über eine entsprechende Getriebeanordnung (73,74,75) mit Hilfe eines Stellmotors (72) in ihre Offenstellung und ihre Arbeitsstellung verschwenkbar sind.

6. Vorrichtung nach Anspruch 5, **dadurch gekennzeichnet**, daß die Schwenklager (70,71) für die Ringform-Segmente (62,63,64,65) auf einer mit einer Durchtrittsöffnung (80) für die Glasscheibe und die obere Biegeform versehenen Lagerplatte (79) angeordnet, und die Lagerplatte (79) entlang der Öffnung (80) mit Stützleisten (81) versehen ist, auf denen die Ringform-Segmente (62,63,64,65) in ihrer Arbeitsstellung aufliegen.

7. Vorrichtung nach einem der Ansprüche 1 bis 6, **dadurch gekennzeichnet**, daß die Ringform-Segmente (9,10,11,12;62,63,64,65) an ihren Enden mit Zentriereinrichtungen (46,47) versehen sind.

## Claims

1. Device for bending glazings, comprising a furnace (1) for heating the glazings to their bending temperature, a bending chamber (6) contiguous with the furnace, a conveying device (2) moving the glazings (3) through the furnace and into the bending chamber, an upper bending mould (14) located in the bending chamber above the conveying plane, means (7) for generating a differential gas pressure for raising the glazings from the conveying device and against the upper bending mould, a lower bending mould in the form of a frame cooperating with the upper bending mould in order to ensure bending by pressing the glazing, held by the differential gas pressure, against the upper bending mould, means for positioning and removing the lower bending mould, as well as a horizontally displaced conveying frame (20) for taking back the bent glazing from the upper bending mould and for conveying it to a downstream cooling station (15), characterized in that the frame-like, lower bending mould is constituted by at least two bending frame segments (9, 10, 11, 12; 51; 62, 63, 64, 65), which can be respectively brought as a function of their opposite radial directions into a position freeing the space between the horizontal conveying device (2) and the upper bending mould (14) and into a working position forming a closed bending frame.

2. Device according to claim 1, characterized in that the bending frame segments (9, 10, 11, 12; 51) are installed in horizontally sliding manner on a support plate (55).

3. Device according to claim 1 or 2, characterized in that the bending frame segments (9, 10, 11, 12) are coupled to one another by means of levers (32, 33, 34) and rods (36, 37, 38, 39) and can be brought by a common servomotor (44) into their two final positions.

4. Device according to any one of the claims 1 to 3, characterized in that at least one bending frame segment (51) can be horizontally displaced, is also installed in pivot bearings (53) and can be brought into a closing position applying the glazing to the upper bending mould.

5. Device according to claim 1, characterized in that the bending frame segments (62, 63, 64, 65) are installed on a shaft (69) parallel to the main direction of the segment and can pivot in their opening position and in their working position by means of an appropriate transmission (73, 74, 75) following the intervention of a servomotor (72).

6. Device according to claim 5, characterized in that the pivot bearings (70, 71) for the bending frame segments (62, 63, 64, 65) are installed on a support plate (79) provided with a passage opening (80) for the glazing and the upper bending mould and in that the support plate (79) is provided along the opening (80) with support laths (81) on which the bending frame segments (62, 63, 64, 65) rest in their working position.

7. Device according to any one of the claims 1 to 6, characterized in that the bending frame segments (9, 10, 11, 12; 62, 63, 64, 65) are provided at their ends with centring devices (46, 47).
